(19) Europäisches Patentamt European Patent Office Office européen des brevets

(11) **EP 1 777 890 A1**

(12) **EUROPEAN PATENT APPLICATION**

(43) Date of publication:
**25.04.2007 Bulletin 2007/17**

(51) Int Cl.:
**H04L 12/56** (2006.01)

(21) Application number: **05292230.9**

(22) Date of filing: **21.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Alcatel Lucent**
**75008 Paris (FR)**

(72) Inventors:
• **Nguyen, Hang**
  **92110 Clichy-la-Garenne (FR)**
• **Rouffet, Denis**
  **92100 Boulogne Billancourt (FR)**

(74) Representative: **Richardt, Markus Albert**
**Leergasse 11**
**65343 Eltville am Rhein (DE)**

(54) **Method for transmitting data in a discontinuous coverage radio network**

(57) To mask coverage discontinuities, e.g. of high and low bit rate zones, when transmitting especially multimedia data to a terminal (209), it is proposed to store the data of a multimedia data stream's basic flow to a basic cache memory (315) with higher priority than storing the data of at least one enhancement flow of a multimedia data stream to at least one enhancement cache memory (317, 319), at least when said terminal (209) is likely to leave a high bit rate zone. The invention addresses as well a multimedia module (205), a terminal (209) and a computer program product adapted to this handling of multimedia streams.

**Fig. 6**

EP 1 777 890 A1

## Description

### Field of the invention

The present invention relates to a method for transmitting data in a discontinuous coverage radio network to a terminal, said discontinuous coverage radio network comprising at least one high bit rate zone, and said discontinuous coverage radio network and/or said terminal comprising a cache memory. It further relates to a module for transmitting multimedia data in a discontinuous coverage radio network to a terminal, a terminal for use in a discontinuous coverage radio network for receiving multimedia data, as well as a computer program product for transmitting multimedia data in a discontinuous coverage radio network to a terminal.

### Background and prior art

In mobile networks, the radio performances are usually not constant. Some kinds of traffic, e.g. real time traffic, have a higher priority compared to other kinds of traffic, for example in case of streaming or data transfer. When a terminal experiences poor radio conditions, the transmission usually stops. A current solution is to reduce the bit rate assigned to the mobile terminal to achieve continuity of service. In case of multimedia data transfer, this is particularly annoying for the user, as the quality of e.g. a video or a piece of music is significantly degraded.

In order to provide a minimum overall quality to the network, usually call admission control mechanisms are implemented. As a consequence, the capacity of the radio network is dimensioned by worst condition, i.e. service is delivered for a guaranteed percentage of places and time. Thus, the capacity is very low.

One known approach for trying to tackle this problem is to implement a video coder bit rate adaptation in function of the acknowledgements received by call admission control. In case of H.263 or MPEG-4, the bit rate varies by a factor of 5 between the minimum and the maximum data rate. The adaptation of the transmitted rate in 3G/HSDPA may vary by a factor of 50 at constant radio resources.

This approach delivers good quality of service, but has several drawbacks: In order to avoid service interruptions, large buffers are used. However, filling these buffers depends on the radio conditions. Under poor radio condition, the buffer is filled only slowly. This results in a very long waiting time for the end-user, before the service starts. Furthermore, there are still situations, where interruptions of the service may occur. And, in cellular networks, the cell border determines the capacity by interferences with other cells and reduced intensity of the radio waves. Thus, at cell borders poor radio conditions can lead to even longer waiting times and eventually interruptions.

The end-user quality of service is adversely degraded. In terms of quality of experience, e.g. changes in image fluidity are noticeable, in case of videos. Long waiting times before the service starts, and interruptions in the middle of a video or music sequence are quite annoying for the end-user.

Accordingly, it is an object of the present invention to provide a method for transmitting data in a discontinuous coverage radio network with improved experienced quality for the end-user as well as a multimedia module for transmitting multimedia data, a terminal for receiving multimedia data and computer program product for transmitting multimedia data.

### Summary of the invention

In a first aspect of the present invention, this object is achieved by a method for transmitting data in a discontinuous coverage radio network to a terminal, said discontinuous coverage radio network comprising at least one high bit rate zone, and said discontinuous coverage radio network and/or said terminal comprising a cache memory, said method comprising the steps of:

- partitioning the cache memory into a basic cache memory and at least one enhancement cache memory;
- filling the basic cache memory with higher speed than the at least one enhancement cache memory, at least when said terminal is likely to leave the high bit rate zone.

By managing the cache memory according to the present method, it is made sure that a least the basic part of data to be transmitted, i.e. the data necessary to provide a minimum service, is always sufficiently available, even in cases of disruptions of radio coverage, e.g. due to coverage discontinuities, because at least the cached basic data may still be transmitted by a low bit rate parent coverage network, or because, if caching is done at the terminal level, service delivery to the user can continue even with temporarily no coverage at all. As soon as the terminal is back in a high bit rate zone, full service can be resumed by caching and further transmitting also enhancement data, which is improving the service, but not is not indispensable.

It will be noted, that it is not only possible to split one cache memory in different parts, one for basic data and at least one for enhancement data, but also to provide separate cache memories.

In preferred embodiment of the method according to the present invention, multimedia data is transmitted, and the data of a multimedia data stream's basic flow is stored into the basic cache memory with higher priority than the data of at least one enhancement flow of the multimedia data stream is stored into the at least one enhancement cache memory, at least when said terminal is likely to leave the high bit rate zone.

In order to improve experienced quality for the end-user the continuity of multimedia service is achieved according to the present invention by relying on caching the basic flow with priority. A multimedia data stream is often split into several flows depending on the relevance of the contained multimedia information: The basic flow contains all necessary data for delivering the multimedia stream with a basic quality. The enhancement flow(s) provide additional information, e.g. higher resolution, that is not really necessary for a basic quality of experience for the end-user. The splitting is possible through various existing.

Especially, when the terminal receiving the multimedia data stream is approaching the border of a high bit rate zone, i.e. a known discontinuity of the radio network, the basic flow - containing all the absolutely necessary data for experiencing the multimedia without noticeable quality loss - is filled with high priority into the basic cache memory to make the basic flow data available even if the end-user leaves the high bit rate zone. Advantageously, the basic cache memory is always filled with high priority to mask unforeseeable coverage discontinuities or interruptions. Depending on capacity, the at least one enhancement cache memory is filled, too, and the at least one enhancement flow is transmitted to the terminal as well.

There are two preferred ways of selectively filling the parts of the cache memory or the dedicated cache memories. One preferred way is to fill the basic cache memory and the at least one enhancement cache memory at constant rate, the basic cache memory being filled in priority and the at least one enhancement cache memory being filled, when resources are available. Thereby, optimal use of available resources is made. The other preferred way is to fill the basic cache memory with a higher bit rate than the at least one enhancement cache memory. Thereby, the quality of experienced service is optimized, as a maximum of enhancement flow data is delivered.

In preferred embodiments of the present invention the method comprises the further steps of:

- estimating the terminal's travel time until entering again a high bit rate zone;
- filling at least as much data of the basic flow into the basic cache memory as needed for the time outside a high bit rate zone.

By extrapolating the amount of data needed to bridge the time gap, while the end-user is not in a high bit rate zone, and anticipatorily filling the basic cache memory with at least this amount, it is made sure that the end-user will in any case get the demanded multimedia service without any disturbance in spite of the fact that he temporarily leaves the high bit rate zone. Furthermore, as the amount of basic flow data is more precisely known, eventually resources can be allocated to filling enhancement flow cache memories, too, or to any other tasks, while still having cached enough basic flow data for a good quality of experience.

It has proven to be advantageous, in case the discontinuous coverage radio network comprises at least two high bit rate zones, to determine the travel time statistically based on the terminal's direction and speed of movement as well as based on the distance of any neighboring high bit rate zone. If there is only one high bit rate zone, one could use a database with probabilities of for how long an end-user leaves the high bit rate zone correlated with speeds and directions of movements.

In a second aspect of the present invention, this object is achieved by a module for transmitting multimedia data in a discontinuous coverage radio network to a terminal, said discontinuous coverage radio network comprising at least one high bit rate zone, with

- a basic cache memory and at least one enhancement cache memory;
- means for storing the data of a multimedia data stream's basic flow to the basic cache memory with higher priority than storing the data of at least one enhancement flow of a multimedia data stream to the at least one enhancement cache memory, at least when said terminal is likely to leave the high bit rate zone.

Preferred embodiments of the module according to the present invention comprise means for estimating the terminal's travel time until entering again a high bit rate zone, when the terminal is likely to leave the high bit rate zone.

In a third aspect of the present invention, this object is achieved by a terminal for use in a discontinuous coverage radio network for receiving multimedia data, said discontinuous coverage radio network comprising at least one high bit rate zone, with

- a basic cache memory and at least one enhancement cache memory;
- means for storing the data of a multimedia data stream's basic flow to the basic cache memory with higher priority than storing the data of at least one enhancement flow of a multimedia data stream to the at least one enhancement cache memory, at least when said terminal is likely to leave the high bit rate zone.

In a last aspect of the present invention, this object is achieved by a computer program product for transmitting multimedia data in a discontinuous coverage radio network to a terminal, said discontinuous coverage radio network comprising at least one high bit rate zone, said computer program product comprising program means for performing the step of:

- storing the data of a multimedia data stream's basic flow to a basic cache memory with higher priority than storing the data of at least one enhancement flow of a multimedia data stream to the at least one enhancement cache memory, at least when said terminal is likely to leave the high bit rate zone.

Preferred embodiments of the computer program product according to the present invention comprise means for estimating the terminal's travel time until entering again a high bit rate zone, when the terminal is likely to leave the high bit rate zone.

**Brief description of the drawings**

A detailed description of the invention is provided below. Said description is provided by way of a non-limiting example to be read with reference to the attached drawings in which:

Figure 1          is a flowchart explaining a preferred embodiment of the method according to the present invention;

Figures 2 to 5    show the transmission of video data in a discontinuous coverage radio network with pico cells for various positions of a user terminal;

Figure 6          shows schematically a first embodiment of a multimedia module according to the present invention cooperating with a terminal;

Figure 7          shows schematically a multimedia module according to the present invention cooperating with an embodiment of a terminal according to the present invention;

Figures 8 and 9   show different possibilities for managing the data transmission speed.

**Detailed description of the invention**

The present invention will be described more in detail with reference to the example of an end-user asking for video streaming service in a heterogeneous network with a discontinuous radio coverage, specifically a low bit rate parent network with pico cells as high bit rate zones. It is to be understood, that the present invention ma be applied to transmission of any kind of data in any kind of discontinuous coverage radio network.

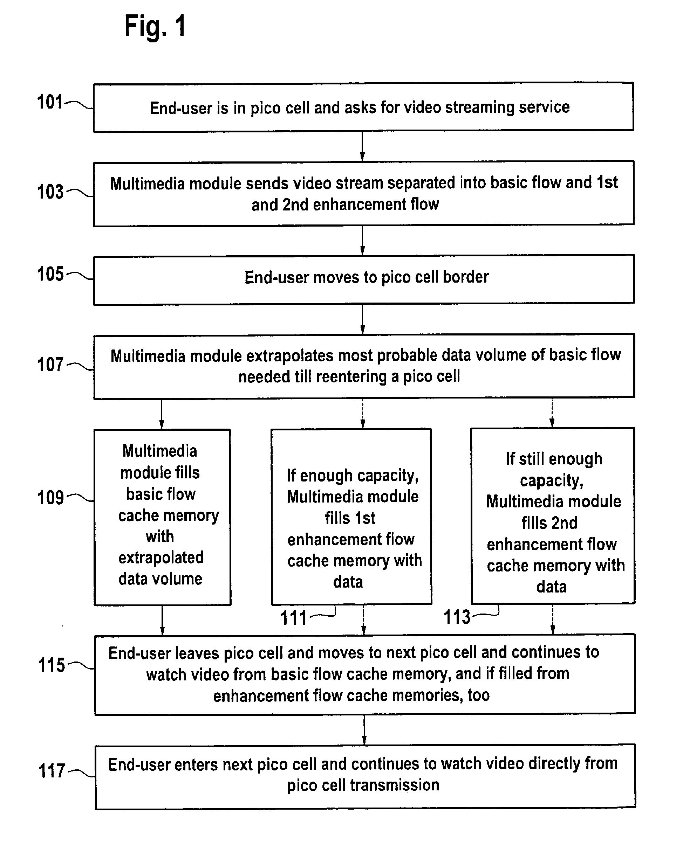

In Figure 1, step 101 the end-user is in a pico cell and asks for video streaming service. Of course, the end user could as well be in a hot spot or any other high bit rate zone. At the beginning of the video streaming service delivery, the end-user is staying in the pico cell, and the multimedia network controlling the delivery sends the video stream separated into a basic flow and a first and second enhancement flow (step 103). Then, the end-user moves near to the pico cell border (step 105). The multimedia network reacts by extrapolating the most probable data volume of basic flow data needed for good quality of experience till reentering a pico cell (step 107). For extrapolation, the multimedia network determines the travel time statistically from the distances to the surrounding pico cells and the estimation of the end-user's velocity, i.e. his speed and direction.

The multimedia network will then fill the basic cache memory with high priority (step 109), such that the basic cache memory contains the whole basic quality video stream corresponding to the travel of the end-user before reaching the next pico cell. It will start sending the basic flow data from the cache memory with high priority as soon as the end-user leaves the pico cell, instead of sending all flows. Consequently, for the end-user, the service does not seem to be interrupted. The video stream can still be playing during his travel in the parent coverage network (step 115).

If there are enough resources available, the multimedia network not only fills the basic cache memory, but also the cache memory corresponding to the first enhancement flow (step 111). If, there are still enough resources, even the cache memory corresponding to the second enhancement flow is filled (step 113). The filling is done at constant rate. Depending on actual radio capacity and available resources, data from the first or even the second enhancement flow may be sent eventually to the end-user.

As soon as the end-user enters the next pico cell he will again receive the full video stream through pico cell transmission (step 117).

As a result of the present invention, the user terminal has a significantly higher availability and a better service quality, the network resources are used preferably in good radio conditions, and consequently the overall capacity is higher: The invention has been tested in 3G/ HSDPA networks with 256kps flows. A standard network of this type cannot handle more than 2 of such flows, and with only mediocre availability. By utilizing the caching technique according to the present invention, the same network can handle around 30 of such flow with excellent availability.

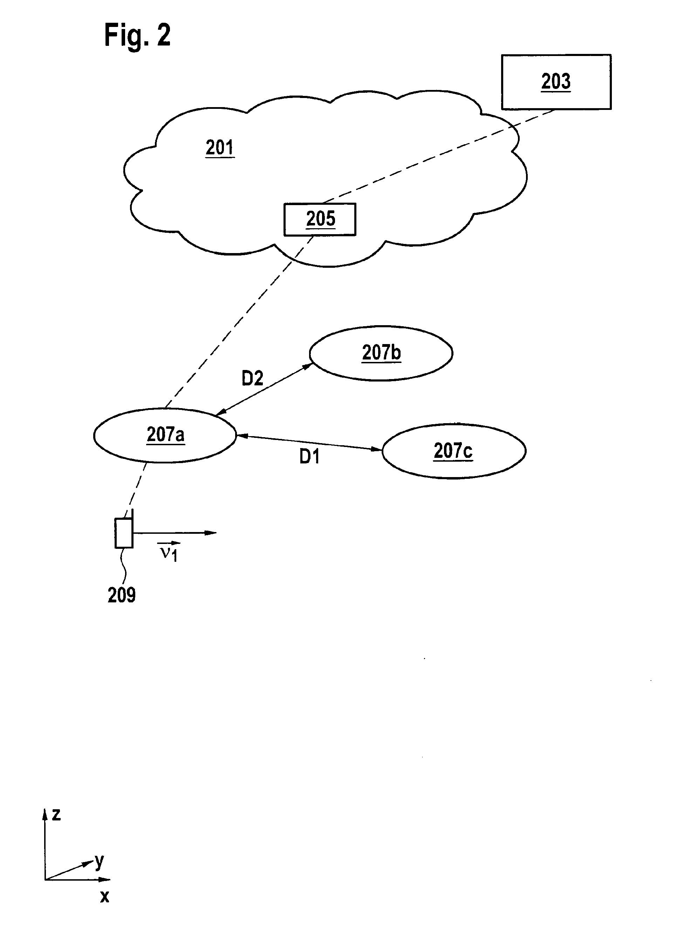

The general concept of masking coverage discontinuities is illustrated in Figures 2 to 5. The discontinuous coverage radio network is made of a parent coverage radio network 201 with low bit rate and high bit rate pico cells 207a,b,c. The end-user in pico cell 207a asks for video streaming service through his terminal 209 (Figure 2). A high bit rate transmission connection is established via pico cell 209, and multimedia module 205 in the parent coverage network 201 to video server 203. The video stream may be received from the video server 203 as a basic flow containing the data necessary for a given experience quality of the video stream and one, two, three or more additional enhancement flows. It is also possible to separate the data stream into basic and enhancement flows at the network level, e.g. in the multimedia module 205.

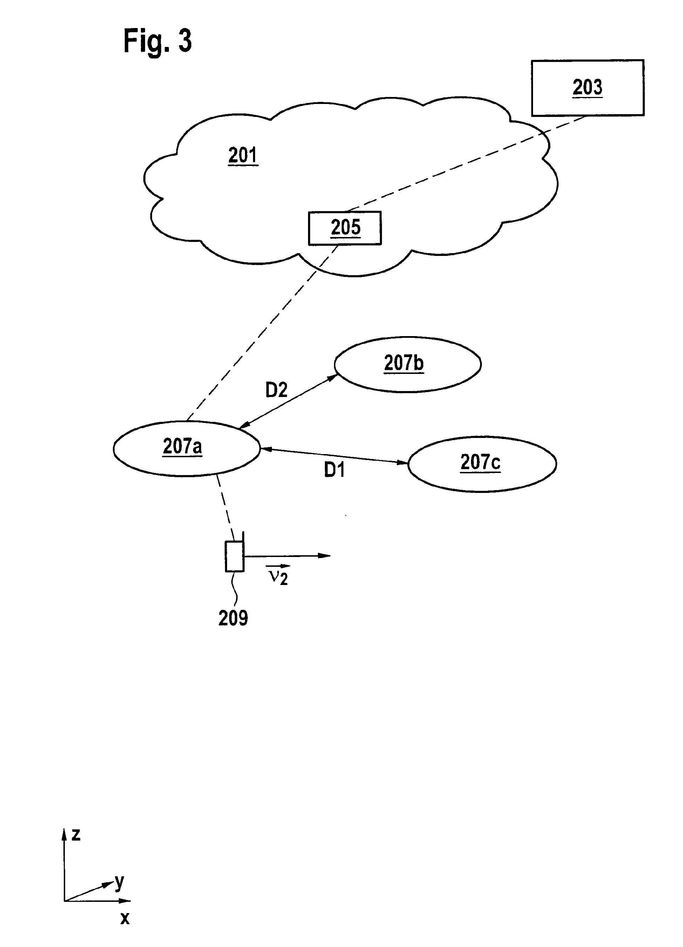

While watching the video, the end-user moves around in the pico cell with a velocity $\vec{v}_1$, i.e. with a certain speed and into a certain direction. By doing so, he comes near to the border of pico cell 207a (Figure 3). The multimedia network 205 determines the expected travel time, if the end-user continues to travel with the actual velocity $\vec{v}_2$ and depending on the distances D1, D2 to the surrounding pico cells 207b,c. To improve the accuracy statistical data concerning possible changes of velocity are also taken into account. Based on the resulting travel time, the multimedia network 205 estimates the needed amount of basic flow data needed to bridge the travel time outside a pico cell 207a,b,c without loss of experience for the end-user and fills the basic flow memory cache with at least this amount of data. If there are available resources left, the multimedia network fills also the at least one enhancement cache memory.

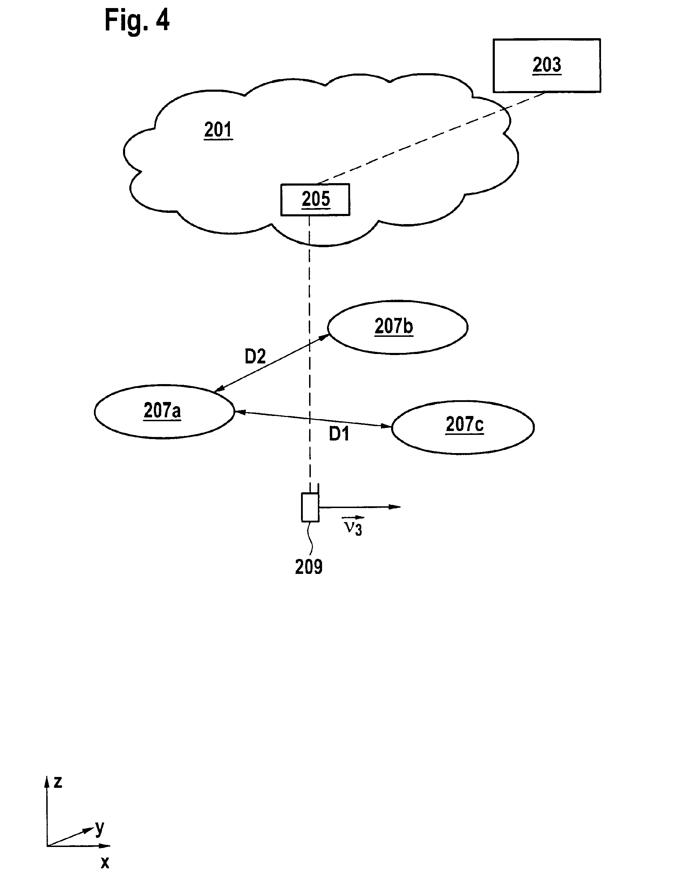

It is also possible to continuously fill the basic cache memory and the at least one any enhancement cache memory, but with different bit rates, the basic cache memory being filled faster than the enhancement cache memory. There is always a provision of data available, at least in the basic cache memory, in case of deterioration or interruption of the transmission, not only when the end-user leaves temporarily a pico cell zone, as shown in Figure 4.

The low bit rate transmission through the parent coverage network 201 as shown in Figure 4 may either slowly continue to fill the basic cache memory, if it is located in the terminal 209, or send the content of the basic cache memory, if it is located on the network side, for example in the multimedia module 205. It is also possible to provide a basic cache memory in both terminal 209 and network 201 and filling the content of the network basic cache memory into the terminal basic cache memory. This applies mutatis mutandis for any enhancement cache memory.

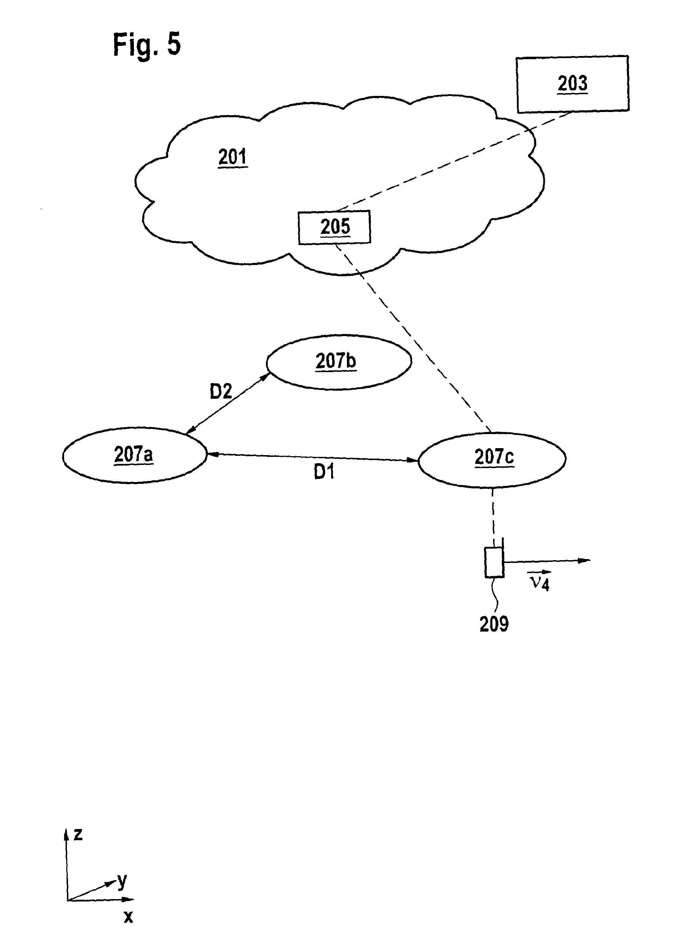

As soon as the end-user enters the next pico cell 207c, the transmission is again handled with a high bit rate (Figure 5).

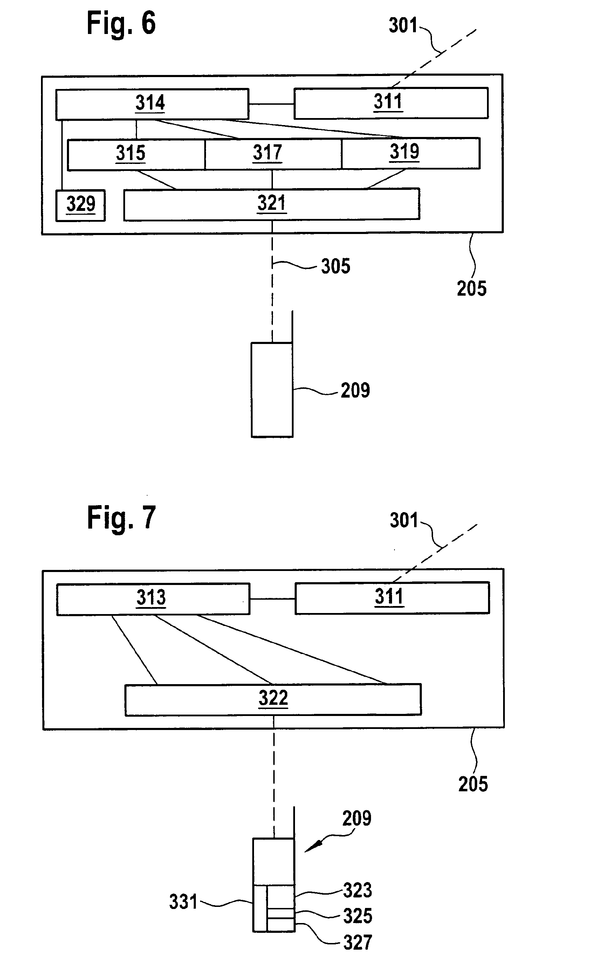

Figure 6 shows more in detail an embodiment of a multimedia module 205 according to the present invention. It receives the video data stream from the video server over the connection 301 with its receiver 311 that transmits it to the filler 314. The video data stream is split up in a basic flow and one or more enhancement flows that are selectively filled as previously explained into dedicated parts of a cache memory, in the present example into basic cache memory 315, first enhancement cache memory 317 and second enhancement cache memory 319, wherein basic cache memory 315, first enhancement cache memory 317 and second enhancement cache memory 319 are partitions of one cache memory. The amount of basic flow data to be filled with priority into the basic cache memory 315 is determined by the estimator 329 estimating the travel time to the next pico cell. The sender 321 then sends the data of the various flows with appropriate priority over connection 305 to terminal 209.

The multimedia module 205 shown in Figure 7 has a receiver 311 for receiving the video data stream and a separator 313 for separating the video data stream into a basic flow and 2 enhancement flows. These are then sent to the terminal 209 according to the present invention via connection 305. A cache memory 323 for the basic flow and two cache memories 325, 327 for the enhancement flows are provided in terminal 209. The controlling of the selective filling of the cache memories 323, 325, 327 is done by the filler 331. As mentioned before, it is also possible to operate a multimedia network with cache memory together with a terminal with cache memory. Furthermore, it is possible to work with only one enhancement cache memory or three, four or more enhancement cache memories.

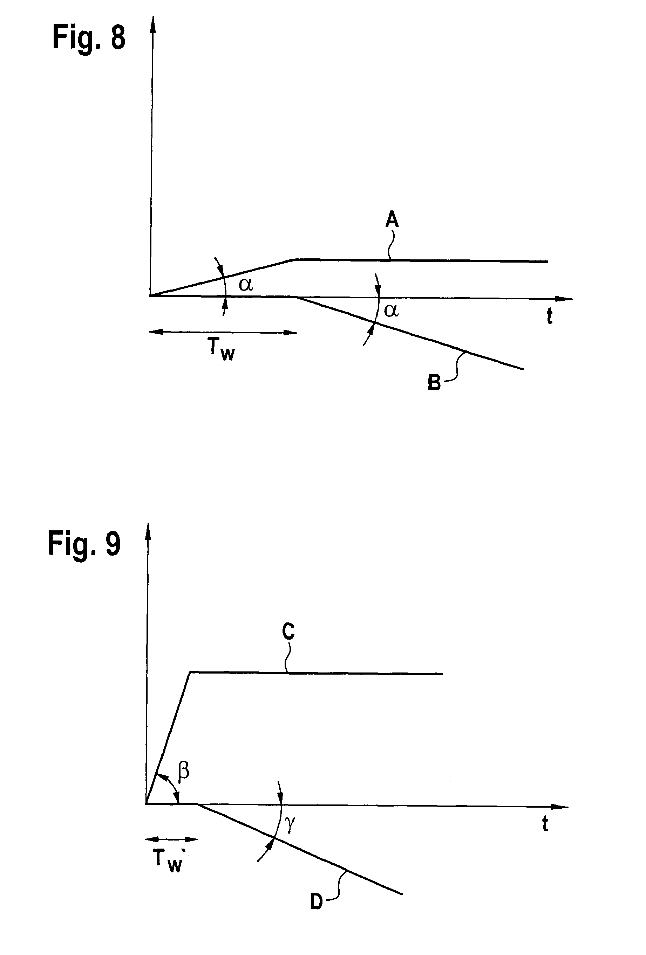

The filling of the basic and enhancement parts of a cache memory can for example be handled according to two examples illustrated in Figures 8 and 9, wherein the multimedia server send data separated into a basic flow and, for example, two enhancement flows. The possibility shown in Figure 8 uses a standard RTP server, which delivers data at constant rate to the radio network. The filling of the different parts of the cache memory is done (curve A),and the delivery starts (curve B), when the data level at least in the basic cache memory is sufficient i.e. after waiting time $T_W$. The filling and the delivery are done at least with the same speed a, to ensure that the cache memory is always at least partially filled to mask any discontinuities in transmission.

According to Figure 9, the basic cache memory part is filled at twice the normal speed, the first enhancement cache memory part at 130% of the normal speed, and the second enhancement cache memory part at normal speed. Thus, the filling (curve C) speed b is higher than delivery (curve D) speed g. this reduces the waiting time $T_w'=(g/b)*T_w$. The cache memory and their filling and delivering can be regulated by RTSP usage, if the cache memory is near saturation.

The configuration of the present examples of Figures 8 and 9 is in either case such that concerning service delivery the basic flow may be received from both the slow parent coverage network and the fast network, e.g. high bit rate cells, with a preference for reception from the fast network, the slow network being used, when the cache memory is almost empty. Thus, in classical cellular networks, caching facilitates the service delivery in adverse radio conditions and also permits to make use of the extra capacity available in good radio conditions.

It will be noted, that the cache management as part of the present invention , including the estimation of a terminals travel time, may be implemented as computer program product.

Although having described several preferred embodiments of the invention, those skilled in the art would appreciate that various changes, alterations, and substitutions can be made without departing from the spirit and concepts of the present invention. The invention is, therefore, claimed in any of its forms or modifications with the proper scope of the appended claims. For example various combinations of the features of the following dependent claims could be made with the features of the independent claim without departing from the scope of the present invention. Furthermore, any reference numerals in the claims shall not be construed as limiting scope.

## List of Reference Numerals

101-117    step
201    discontinuous coverage radio network
203    video server
205    multimedia network
207a,b,c    pico cell
209    user terminal
D1, D2    distance
$\vec{v}_1, \vec{v}_2, \vec{v}_3, \vec{v}_4$    velocity
301    connection to video server
305    connection to user terminal
311    receiver
313    separator
314    filler
315    cache memory
317    cache memory
319    cache memory
321    sender
322    sender
323    cache memory
325    cache memory
327    cache memory
329    estimator
331    filler
$T_w, T_{w'}$    waiting time
A,C    data volume in cache memory
B, D    data volume out of cache memory
a,b,g,d    transmission speed

## Claims

1. A method for transmitting data in a discontinuous coverage radio network to a terminal, said discontinuous coverage radio network comprising at least one high bit rate zone, and said discontinuous coverage radio network and/or said terminal comprising a cache memory, said method comprising the steps of:

    - partitioning the cache memory into a basic cache memory and at least one enhancement cache memory;
    - filling the basic cache memory with higher speed than the at least one enhancement cache memory, at least when said terminal is likely to leave the high bit rate zone.

2. The method according claim 1, wherein multimedia data is transmitted, and wherein the data of a multimedia data stream's basic flow is stored into the basic cache memory with higher priority than the data of at least one enhancement flow of the multimedia data stream is stored into the at least one enhancement cache memory, at least when said terminal is likely to leave the high bit rate zone.

3. The method according to claim 1 or 2, wherein the filling of the basic cache memory and of the at least one enhancement cache memory is done at constant rate, the basic cache memory being filled in priority and the at least one enhancement cache memory being filled, when resources are available.

4. The method according to claim 1 or 2, wherein the filling of the basic cache memory is done with a higher bit rate than the filling of the at least one enhancement cache memory.

5. The method according to any of claims 1 to 4, comprising the further steps of:

    - estimating the terminal's travel time until entering again a high bit rate zone;
    - filling at least as much data of the basic flow into the basic cache memory as needed for the time outside a high bit rate zone.

6. A module (205) for transmitting multimedia data in a discontinuous coverage radio network (201) to a terminal (209), said discontinuous coverage radio network (201) comprising at least one high bit rate zone (207a,b,c), with

    - a basic cache memory (315) and at least one enhancement cache memory (317, 319);
    - means (314) for storing the data of a multimedia data stream's basic flow to the basic cache memory (315) with higher priority than storing the data of at least one enhancement flow of a multimedia data stream to the at least one enhancement cache memory (317, 319), at least when said terminal (209) is likely to leave the high bit rate zone (207a,b,c).

7. The module according to claim 6, further comprising means (329) for estimating the terminal's (209) travel time until entering again a high bit rate zone, when the terminal (209) is likely to leave the high bit rate zone (207a,b,c).

8. A terminal (209) for use in a discontinuous coverage radio network (201) for receiving multimedia data, said discontinuous coverage radio network (201) comprising at least one high bit rate zone (207a,b, c), with

   - a basic cache memory (323) and at least one enhancement cache memory (325, 327);
   - means (331) for storing the data of a multimedia data stream's basic flow to the basic cache memory (323) with higher priority than storing the data of at least one enhancement flow of a multimedia data stream to the at least one enhancement cache memory (325, 327), at least when said terminal (209) is likely to leave the high bit rate zone (207a,b,c).

9. A computer program product for transmitting multimedia data in a discontinuous coverage radio network to a terminal, said discontinuous coverage radio network comprising at least one high bit rate zone, said computer program product comprising program means for performing the step of:

   - storing the data of a multimedia data stream's basic flow to a basic cache memory with higher priority than storing the data of at least one enhancement flow of a multimedia data stream to the at least one enhancement cache memory, at least when said terminal is likely to leave the high bit rate zone.

10. The computer program product according to claim 9, further comprising program means for performing the step of estimating the terminal's travel time until entering again a high bit rate zone, when the terminal is likely to leave the high bit rate zone.

# Fig. 1

101 — End-user is in pico cell and asks for video streaming service

103 — Multimedia module sends video stream separated into basic flow and 1st and 2nd enhancement flow

105 — End-user moves to pico cell border

107 — Multimedia module extrapolates most probable data volume of basic flow needed till reentering a pico cell

109 — Multimedia module fills basic flow cache memory with extrapolated data volume

If enough capacity, Multimedia module fills 1st enhancement flow cache memory with data

111

If still enough capacity, Multimedia module fills 2nd enhancement flow cache memory with data

113

115 — End-user leaves pico cell and moves to next pico cell and continues to watch video from basic flow cache memory, and if filled from enhancement flow cache memories, too

117 — End-user enters next pico cell and continues to watch video directly from pico cell transmission

# Fig. 2

# Fig. 3

# Fig. 4

## Fig. 5

$\overrightarrow{v_4}$

201
203
205
207b
207a
207c
D2
D1
209

z
y
x

## Fig. 6

301

| 314 | | 311 |
| --- | --- | --- |

| 315 | 317 | 319 |
| --- | --- | --- |

| 329 | 321 |
| --- | --- |

305

205

209

## Fig. 7

301

| 313 | | 311 |
| --- | --- | --- |

| 322 |
| --- |

205

209

331
323
325
327

**Fig. 8**

**Fig. 9**

# EP 1 777 890 A1

**European Patent Office**

## EUROPEAN SEARCH REPORT

Application Number

EP 05 29 2230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 100 25 725 A1 (WALKE, BERNHARD; HERWONO, IAN) 6 December 2001 (2001-12-06) * the whole document * ----- | 1-10 | H04L12/56 |
| Y | HONG MAN ET AL: "A joint source coding and networking scheme for video streaming over wireless LANs" INFORMATION TECHNOLOGY: RESEARCH AND EDUCATION, 2003. PROCEEDINGS. ITRE2003. INTERNATIONAL CONFERENCE ON AUG. 11-13, 2003, PISCATAWAY, NJ, USA, IEEE, 11 August 2003 (2003-08-11), pages 60-64, XP010684973 ISBN: 0-7803-7724-9 * the whole document * ----- | 1-10 | |
| Y | EP 1 531 588 A (AGERE SYSTEMS, INC) 18 May 2005 (2005-05-18) * paragraph [0007] - paragraph [0012] * * paragraph [0015] - paragraph [0033] * ----- | 1-10 | |
| A | WO 2004/002091 A (THOMSON LICENSING S.A; ZHANG, JUNBIAO; LI, JUN; RAMASWAMY, KUMAR) 31 December 2003 (2003-12-31) * page 4, line 23 - page 14, line 4 * ----- | 1-10 | TECHNICAL FIELDS SEARCHED (IPC) H04L |
| A | EP 1 511 191 A (MATSUSHITA ELECTRIC INDUSTRIAL CO., LTD) 2 March 2005 (2005-03-02) * paragraph [0010] - paragraph [0033] * ----- | 1-10 | |

The present search report has been drawn up for all claims

| Place of search | Date of completion of the search | Examiner |
|---|---|---|
| The Hague | 28 February 2006 | Poort, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

**ANNEX TO THE EUROPEAN SEARCH REPORT
ON EUROPEAN PATENT APPLICATION NO.**

EP 05 29 2230

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2006

| Patent document cited in search report | | | Publication date | Patent family member(s) | | Publication date |
|---|---|---|---|---|---|---|
| DE 10025725 | A1 | | 06-12-2001 | NONE | | |
| EP 1531588 | A | | 18-05-2005 | JP | 2005168002 A | 23-06-2005 |
| | | | | US | 2005100022 A1 | 12-05-2005 |
| WO 2004002091 | A | | 31-12-2003 | AU | 2003243644 A1 | 06-01-2004 |
| | | | | CN | 1663206 A | 31-08-2005 |
| | | | | EP | 1532785 A1 | 25-05-2005 |
| | | | | JP | 2005531213 T | 13-10-2005 |
| | | | | MX | PA04012868 A | 19-04-2005 |
| EP 1511191 | A | | 02-03-2005 | AU | 2003241873 A1 | 19-12-2003 |
| | | | | CN | 1659803 A | 24-08-2005 |
| | | | | WO | 03103188 A1 | 11-12-2003 |
| | | | | US | 2005213538 A1 | 29-09-2005 |

EPO FORM P0459

For more details about this annex : see Official Journal of the European Patent Office, No. 12/82